(19)

**Europäisches Patentamt**
**European Patent Office**
**Office européen des brevets**

(11)  **EP 2 469 507 A1**

(12)  # EUROPÄISCHE PATENTANMELDUNG

(43) Veröffentlichungstag:
 **27.06.2012  Patentblatt 2012/26**

(51) Int Cl.:
 *G10K 11/00* (2006.01)   *B63G 8/39* (2006.01)

(21) Anmeldenummer: **11194512.7**

(22) Anmeldetag: **20.12.2011**

(84) Benannte Vertragsstaaten:
 **AL AT BE BG CH CY CZ DE DK EE ES FI FR GB GR HR HU IE IS IT LI LT LU LV MC MK MT NL NO PL PT RO RS SE SI SK SM TR**
 Benannte Erstreckungsstaaten:
 **BA ME**

(30) Priorität: **23.12.2010  DE 102010056119**

(71) Anmelder: **ATLAS Elektronik GmbH**
 **28309 Bremen (DE)**

(72) Erfinder:
 • **Emke, Josef**
  **49685 Emstek (DE)**
 • **Hoffmann, Christoph**
  **27777 Ganderkesee (DE)**
 • **Wicker, Kai**
  **28357 Bremen (DE)**

(74) Vertreter: **Wasiljeff, Johannes M.B.**
 **Jabbusch Siekmann & Wasiljeff**
 **Patentanwälte**
 **Otto-Lilienthal-Strasse 25**
 **28199 Bremen (DE)**

(54) **Akustische Unterwasserantenne, U-Boot mit derartiger Antenne sowie Verfahren zum Peilen, Orten und/oder Klassifizieren eines Ziels mittels einer derartigen Antenne**

(57)   Die Erfindung betrifft eine akustische Unterwasserantenne 14 zum Anbau an einen Bootskörper eines Wasserfahrzeugs 2 mit einer Vielzahl von in Abständen nebeneinander angeordneten elektroakustischen und/oder optoakustischen Wandlern 18 und/oder Wandleranordnungen, insbesondere Staves, zum Senden und/oder Empfangen von Schallwellen 20. Die Wandler 18 und/oder Wandleranordnungen sind derart am Bootskörper des Wasserfahrzeugs 2 anbringbar, dass sich die Ausdehnung der Antenne 14, abhängig von den Abmessungen des Wasserfahrzeugs 2, vom Heckbereich des Wasserfahrzeugs 2 längsseits des Wasserfahrzeugs 2 bis zum Bug, um den Bug herum und auf der anderen Seite des Wasserfahrzeugs 2 längsseits bis zum Heckbereich erstreckt.
   Ferner betrifft die Erfindung ein U-Boot 2, an dem eine derartige erfindungsgemäße Unterwasserantenne 2 angebracht ist sowie ein Verfahren zum Peilen, Orten und/oder Klassifizieren eines schallabstrahlenden Zieles mittels einer derartigen erfindungsgemäßen Unterwasserantenne 2.

Fig. 2

**Beschreibung**

Die Erfindung betrifft eine akustische Unterwasserantenne zum Anbau an einen Bootskörper gemäß dem Oberbegriff von Anspruch 1, ein U-Boot mit einer akustischen Unterwasserantenne gemäß dem Oberbegriff von Anspruch 9 sowie ein Verfahren zum Peilen, Orten und/oder Klassifizieren mittels einer akustischen Unterwasserantenne gemäß dem Oberbegriff von Anspruch 11.

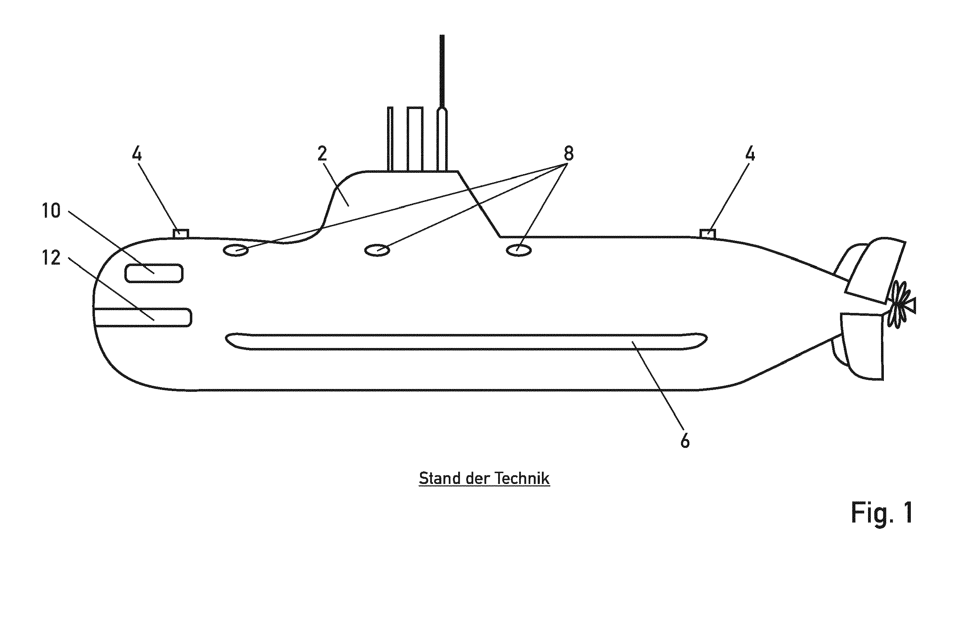

An Bord eines Wasserfahrzeugs, insbesondere eines U-Bootes, befinden sich üblicherweise mehrere akustische Unterwasserantennen, die an unterschiedlichen Orten an Bord des U-Bootes installiert und für unterschiedliche Empfangsfrequenzbereiche optimal ausgelegt sind (Fig. 1).

DE 199 09 485 C1 zeigt bspw. eine elektroakustische Wandleranordnung für eine Unterwasserantenne bei der mehrere Wandlerelemente aus piezoelektrischen Keramikkörpern mit Front- und Rückmasse nach Art eines Tonpilzes zusammen auf einem Träger montiert sind. Dabei weisen die Wandler einen einheitlichen Aufbau auf.

EP 0 654 953 B1 zeigt eine weitere elektroakustische Wandleranordnung für Unterwasserantennen aus mehreren an einem Träger vertikal übereinander, äquidistant angeordneten Hydrophonen. Diese Hydrophone sind zusammen mit einem in Schalleinfallsrichtung hinter ihnen angeordneten Reflektor in einem akustisch transparenten Hartumguss eingebettet. Eine derartige stabförmige Wandleranordnung wird im Allgemeinen Stave genannt und besitzt bei geeigneter Signalverarbeitung der Hydrophon-Ausgangssignale aufgrund der vertikal übereinanderliegenden Hydrophone eine Richtcharakteristik mit einer ausreichend schmalen Hauptkeule auch in Vertikalrichtung.

Die hier dargestellte Unterwasserantenne ist als Zylinderbasis ausgeführt, wobei die einzelnen Staves auf einem zylinderförmigen Träger aufgesetzt sind. Derartige Zylinderbasen, aber auch Hufeisenbasen oder Comformal Arrays, werden vorwiegend zur passiven, akustischen Ortung im Frequenzbereich zwischen 1 und 12 kHz genutzt, um breitbandige Fahrgeräusche von Wasserfahrzeugen zu detektieren. Derartige Unterwasserantennen erlauben eine Ortung über einen Panoramawinkel von bis zu 360 Grad bei Verwendung von Zylinderbasen und einen etwas eingeschränkten Ortungssektor bei Verwendung von Hufeisenbasen.

In EP 2 010 936 B1 wird zur Peilung von schallabstrahlenden, d.h. schallerzeugenden oder schallreflektierenden, Zielen eine Unterwasserantenne verwendet, die an einem Unterwasserfahrzeug steuerbord- und backbordseitig festgelegt ist. Eine derartige Unterwasserantenne, die als Flank-Array oder Seitenantenne bezeichnet wird, weist eine Vielzahl von elektroakustischen Wandlern auf, die äquidistant im Abstand d voneinander hintereinander gereiht sind. Sie spannt dadurch zur Peilung einen Empfangssektor im seitlichen Winkelbereich des Wasserfahrzeugs von nahezu 180 Grad auf. Da der Empfangsfrequenzbereich, üblicherweise im tiefen und mittleren Frequenzbereich ausgenutzt werden kann, besitzt eine derartige Unterwasserantenne eine große Reichweite.

DE 10 2006 045 686 B3 zeigt bspw. ein unbemanntes Unterwasserfahrzeug zum Aufklären eines Seegebietes. Dazu verfügt das Fahrzeug über je eine auf Backbord und Steuerbord angeordneten Seitenantenne, ein Flank-Array, und ein Bugsonar, wobei das Flank-Array niederfrequente Schallsignale und das Bugsonar hochfrequente Schallsignale empfängt.

Bei Detektion eines schallabstrahlenden Fahrzeugs wird eine Peilung zu diesem Fahrzeug angegeben. US 4 910 719 zeigt bspw. eine Wandleranordnung zum zusätzlichen Bestimmen der Entfernung des Fahrzeugs, bei der drei Sensoren an der Seite eines Unterwasserfahrzeugs auf einer Linie angeordnet sind und einen vorbestimmten Abstand zueinander aufweisen. Dadurch erreicht eine gekrümmte Wellenfront einer einfallenden Schallwelle die drei Sensoren jeweils mit einer Zeitdifferenz. Die Zeitdifferenzen sind dabei abhängig von der Entfernung des Fahrzeugs und der Einfallsrichtung der Schallwellen. Dadurch kann, bspw. mittels Korrelation, die Entfernung und Peilung des Fahrzeugs ermittelt werden. Das hier dargestellte Verfahren, auch Passiv-Ranging-Sonar-Verfahren genannt, zur Ermittlung der Entfernung eines schallabstrahlenden Fahrzeugs arbeitet umso genauer, je größer die Abstände zwischen den drei Sensoren sind.

DE 196 12 503 C2 zeigt ein elektroakustisches Wandlermodul zur Wahrnehmung von Intercept-Funktionen. Ein derartiges Wandlermodul dient zur Erfassung hochfrequenter Schallimpulse, die üblicherweise von anderen Sonaranlagen gesendet werden, um den Träger dieser Sonaranlage zu orten. Ferner werden die empfangenen Schallimpulse üblicherweise bzgl. ihres Frequenzbereichs, der Modulationsart, der Pulslänge und Pulswiederholfrequenz analysiert, um Ziele zu klassifizieren und zu identifizieren.

DE 10 2004 037 987 A1 zeigt eine elektroakustische Unterwasserantenne, insbesondere eine an der Außenhaut von Unterwasserfahrzeugen befestigbare Seitenantenne, bei der Hydrophone in Reihen und Spalten auf einem Kunststoffkörper angeordnet sind. Eine derartige Unterwasserantenne kombiniert die akustischen Vorteile eines Flank-Arrays bzgl. seiner Empfangsempfindlichkeit im tieffrequenten Bereich und die Vorteile einer Zylinderbasis oder Hufeisenbasis bzgl. guter Bündelung des vertikalen Empfangsbereichs.

DE 36 33 991 A1 zeigt eine Wandleranordnung, die derart ausgestaltet ist, um eine Richtcharakteristik mit konstantem Öffnungswinkel innerhalb eines breiten Frequenzbereiches zu erzeugen. Dazu wird der Frequenzbereich in Frequenzbänder unterteilt und jedem Frequenzband gleich viele Wandler zu einer Wandlergruppe zusammengefasst. Die Wandlergruppen sind platzsparend ineinander verschachtelt auf der Länge der

---

Wandleranordnung angebracht.

Eine derartige Vielfalt der Unterwasserantennen führt nachteilig zu steigenden Herstellungs- und Instandhaltungskosten. Da die Unterwasserantennen herkömmlicherweise in sich geschlossene Einheiten bilden, erfordern verschiedene Hersteller einzelner Unterwasserantennen spezielle Signalverarbeitungseinheiten zur Bearbeitung der jeweiligen speziellen Funktionen der jeweiligen Unterwasserantenne.

Der Erfindung liegt nach alledem das Problem zugrunde, eine verbesserte, kostengünstigere akustische Unterwasserantenne zu schaffen.

Die Erfindung löst dieses Problem durch die Merkmale einer akustischen Unterwasserantenne zum Anbau an einen Bootskörper eines Wasserfahrzeugs gemäß Anspruch 1, durch die Merkmale eines U-Bootes gemäß Anspruch 9 sowie durch die Merkmale eines Verfahrens gemäß Anspruch 11.

Dazu weist eine akustische Unterwasserantenne zum Anbau an einen Bootskörper eine Vielzahl von nebeneinander angeordneten elektroakustischen und/oder optoakustischen Wandlern bzw. Wandleranordnungen zum Senden und/oder Empfangen von Schallwellen auf. Die nebeneinander angeordneten Wandler und/oder Wandleranordnungen, auch Stave genannt, bilden ein oder mehrere Antennensegmente, die aneinandergereiht die Unterwasserantenne bilden. Diese Antennensegmente sind derart ausgestaltet, um am Bootskörper des Wasserfahrzeugs angebracht zu werden und zwar derart, dass sich diese Unterwasserantenne vorteilhafterweise vom hinteren Heck auf der Steuerbordseite längsseits des Wasserfahrzeugs bis zum Bug, um den Bug herum und auf der Backbordseite längsseits des Fahrzeugs bis zum Heck erstreckt. Da die Unterwasserantenne der äußeren Gestalt des Wasserfahrzeugs folgt, ist die Ausdehnung der Antenne abhängig von den Abmessungen des Wasserfahrzeugs. Mit einer derartigen Anordnung der Unterwasserantenne wird vorteilhaft eine Performance-Steigerung mit verbesserter Tief- und Mittelfrequenz-Detektion erreicht, da der ausgenutzte Antennenbereich zum Abdecken von Funktionen einer herkömmlichen Seitenantenne im Vergleich dazu länger ausfällt als die Länge einer herkömmlichen Seitenantenne.

In einer bevorzugten Ausführungsform der Erfindung ist der Unterwasserantenne zur weiteren Verarbeitung der Wandlersignale vorteilhafterweise eine zentrale Signalverarbeitungseinheit nachgeschaltet. Die Sendesignale und/oder Empfangssignale aller Wandler und/oder Wandleranordnungen werden der Signalverarbeitungseinheit zugeführt zur Steuerung von Frequenzbereich und Apertur der gesamten Antenne.

In einer weiteren bevorzugten Ausführungsform der Erfindung ist ein Frequenzbereich in dem Schallwellen sendbar und/oder empfangbar sind je Antennensegment auswählbar. Das Auswählen des Frequenzbereichs erfolgt vorteilhafterweise durch Hinzuschalten oder Auslassen von Wandlern oder Wandleranordnungen. Somit sind die Antennensegmente vorteilhaft derart ausgestaltet, um eine Vielzahl von verschiedenen Frequenzbereichen, die zum Detektieren und Orten von schallabstrahlenden Zielen benötigt werden, abzudecken.

Gemäß einer weiteren bevorzugten Ausführungsform der Erfindung weist die Unterwasserantenne eine lokale erhöhte Wandlerdichte, insbesondere im Bereich vom Bug und/oder vom Heck und/oder von der Bootsmitte des Wasserfahrzeugs, auf. Dadurch entsteht der Vorteil Intercept-Funktionen mit einer derartigen erfindungsgemäßen Unterwasserantenne ausführen zu können, da sich durch eine Erhöhung der Wandlerdichte der Abstand der verwendeten Wandler oder Wandleranordnungen zueinander verringert und somit hochfrequente Schallimpulse verarbeitet werden können.

Ferner ermöglicht eine Erhöhung der Wandlerdichte am Bug, Heck und ggf. in der Bootsmitte eine passive Zielentfernungsschätzung, bspw. durch Einsatz von Passiv-Ranging-Sonar-Verfahren, mit hohem Signal-Stör-Verhältnis. Dies ermöglicht zusätzlich zur Peilung eines schallabstrahlenden Fahrzeugs auch eine Ermittlung der Entfernung zu diesem Fahrzeug.

In einer weiteren Ausführungsform der Erfindung lässt sich die Unterwasserantenne parallel sowohl aktiv als auch passiv mit ausgewählten Wandlern und/oder Wandleranordnungen zum Senden und Empfangen von Schallwellen betreiben. Dadurch ist vorteilhaft eine parallele Anwendung des Aktiv-Ranging-Sonar-Verfahrens und des Passiv-Ranging-Sonar-Verfahrens möglich, womit eine genauere Entfernungseinschätzung zum schallabstrahlenden Fahrzeug und somit eine höhere Qualität einer Zielparameter-Analyse bewirkt wird.

Gemäß einer weiteren bevorzugten Ausführungsform der Erfindung werden alle Wandler und/oder Wandleranordnungen der Unterwasserantenne in ihrem Aufbau vereinheitlicht. Dadurch wird der Vorteil von niedrigen Herstellungskosten und Instandhaltungskosten der Unterwasserantenne erzielt.

In einer weiteren Ausführungsform der Erfindung sind beliebige Wandler zum Bilden von Antennensegmenten auswählbar. Dabei sind die ausgewählten Wandler für ein oder mehrere Antennensegmente nutzbar und die Antennensegmente angrenzend und/oder überlappend und/oder beabstandet bildbar. Somit lassen sich spezielle, funktionsorientierte Antennensegmente erstellen, welche vorteilhaft spezielle Antennenfunktionen abdecken.

In einer weiteren bevorzugten Ausführungsform der Erfindung sind die einzelnen Antennensegmente bzgl. ihrer Nutzung bzw. Funktion steuerbar. Die Steuerung erfolgt vorteilhaft mittels einer Steuereinheit, indem ein, mehrere oder alle Wandler und/oder Wandleranordnungen mittels eines Schaltmittels anschaltbar und/oder abschaltbar sind. Diese Steuerung erfolgt situationsbedingt, wodurch der Vorteil entsteht, Strom einzusparen, weil nicht immer alle Wandler gleichzeitig betrieben werden. Dadurch werden bspw. bei einem U-Boot längere Tauchfahrten ermöglicht.

Eine alternative Ausgestaltung der Erfindung sieht ein U-Boot mit einer erfindungsgemäßen, akustischen Unterwasserantenne vor, bei der die Antennensegmente am Bootskörper des U-Bootes derart angeordnet sind, dass sich die Ausdehnung der Antenne, abhängig von den Abmessungen des U-Bootes, vom Heckbereich des U-Bootes längsseits des U-Bootes bis zum Bug, um den Bug herum und auf der anderen Seite des U-Bootes längsseits bis zum Heckbereich erstreckt.

Gemäß einer weiteren alternativen Ausführungsform der Erfindung werden zum Peilen, Orten und/ oder Klassifizieren mittels der erfindungsgemäßen Unterwasserantenne die Antennensegmente dieser Unterwasserantenne an einen Bootskörper eines Wasserfahrzeugs angebracht, wobei sich die Ausdehnung der Unterwasserantenne, anhängig von den Abmessungen des Wasserfahrzeugs, vom Heckbereich des Wasserfahrzeugs längsseits des Wasserfahrzeugs bis zum Bug, um den Bug herum und auf der anderen Seite des Wasserfahrzeugs längsseits bis zum Heckbereich erstreckt.

In einer weiteren bevorzugten Ausführungsform der Erfindung wird zunächst eine erste Peilung mittels einem oder mehrerer Antennensegmente der erfindungsgemäßen Unterwasserantenne in einem Empfangssektor durchgeführt und bei Detektion eines schallabstrahlenden Zieles eine zweite Peilung in diesem Empfangssektor durchgeführt, wobei die Auflösung der zweiten Peilung gegenüber der ersten Peilung erhöht wird und die Erhöhung der Auflösung mittels Hinzuschalten von Wandlern oder Wandleranordnungen und/oder Antennensegmenten erzielt wird. Durch Peilungen innerhalb eines Empfangssektors mit unterschiedlichen Auflösungen entsteht der Vorteil, Energie einzusparen, da die Anzahl der betriebenen Wandler nach Bedarf variiert wird.

Gemäß einer weiteren Ausführungsform der Erfindung werden mittels der erfindungsgemäßen akustischen Unterwasserantenne Antennenfunktionen von mindestens zwei Antennen aus einer Gruppe von Antennen, nämlich Zylinderbasis, Hufeisenbasis, Intercept-Basis, Passiv-Ranging-Sonar-/Active-Ranging-Sonar-Basis, Flank-Array, flächige Seitenantenne, ausgeführt, wobei die Wandler und/oder Wandleranordnungen Sendesignale und/oder Empfangssignale erzeugen, welche von einer zentralen Signalverarbeitungseinheit verarbeitet werden. Das Zusammenfassen separater Antennenfunktionen sowie das Ausführen dieser Funktionen mit einer Antenne haben den Vorteil einzelne, separate Antennen an Bord des Wasserfahrzeugs einzusparen.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:

Fig. 1    ein U-Boot mit einer Mehrzahl separat angeordneter Unterwasserantennen gemäß dem Stand der Technik,

Fig. 2    ein U-Boot mit einer integrierten akustischen Unterwasserantenne,

Fig. 3    eine schematische Darstellung einer Linearantenne und

Fig. 4    eine schematische Darstellung mehrerer Antennensegmente.

In Fig. 1 ist ein U-Boot 2 mit einer Mehrzahl separat angeordneter Unterwasserantennen gemäß dem Stand der Technik dargestellt.

Im vorderen und hinteren Bereich des U-Bootes 2 befinden sich je eine Intercept-Basis 4 zum Empfangen von hochfrequenten Schallimpulsen.

Auf den beiden Längsseiten des U-Bootes 2 befindet sich jeweils eine Seitenantenne 6, auch Flank-Array genannt, die für einen Betrieb im tiefen und mittleren Frequenzbereich ausgelegt sind.

Ebenfalls beidseitig des U-Bootes 2 sind jeweils drei Teilbasen einer Passiv-Ranging-Sonar-Basis 8 angeordnet, die zur passiven Bestimmung der Entfernung eines schallabstrahlenden Ziels genutzt werden.

Mittels einer Zylinderbasis 10 am Bug des U-Bootes 2 werden breitbandige Fahrgeräusche eines Wasserfahrzeugs ausgewertet. Ferner wird die Einfallsrichtung eines Schallimpulses mittels der Zylinderbasis 10 bestimmt.

Am Bug des U-Bootes 2 befindet sich des Weiteren eine Hufeisenbasis 12, auch Comformal-Array genannt, zum Orten einer Schallquelle mit breitbandiger Abstrahlung von Schallwellen.

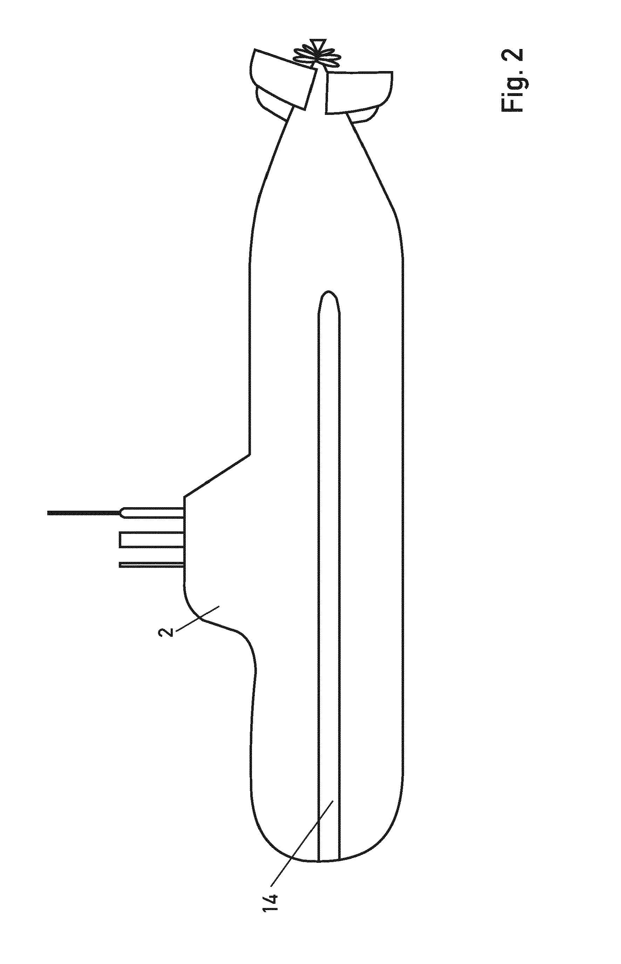

Fig. 2 zeigt demgegenüber ein U-Boot 2 mit einer erfindungsgemäßen, integrierten akustischen Unterwasserantenne 14.

Die Funktionen der in Fig. 1 dargestellten, separat angeordneten Unterwasserantennen 4, 6, 8, 10, 12, 14 sind in der in Fig. 2 dargestellten, erfindungsgemäßen Unterwasserantenne 14 integriert. Bei einer alternativen Ausführungsform der Erfindung sind jedoch auch einzelne Funktionen einer oder mehrerer der in Fig. 1 dargestellten Unterwasserantennen in der erfindungsgemäßen Unterwasserantenne integriert.

Dazu verläuft diese Unterwasserantenne 14 vom rechtsseitigen Heckbereich zum Bug, um den Bug herum und zum linksseitigen Heck und passt sich der Form des U-Bootes 2 an.

Ein entsprechender Aufbau dieser Unterwasserantenne 14 sieht einen Träger zum Anbau der Unterwasserantenne 14 an den Bootskörper des U-Bootes 2 vor, der den Ausmaßen der Unterwasserantenne 14 entspricht.

Auf diesen Träger werden zum Senden und/ oder Empfangen von Schallwellen Wandler befestigt. Diese sind zum Anpassen der Unterwasserantenne 14 an verschiedene Frequenzen in einem unterschiedlichen Abstand innerhalb der Unterwasserantenne 14 angeordnet. Zum Bearbeiten der Schallsignale im tiefen Frequenzbereich weist die Unterwasserantenne 14 im Seitenbereich einen größeren Abstand der Wandler auf als im Bugbereich, da die Antenne 14 im Bugbereich vorwiegend höhere Frequenzen verarbeitet.

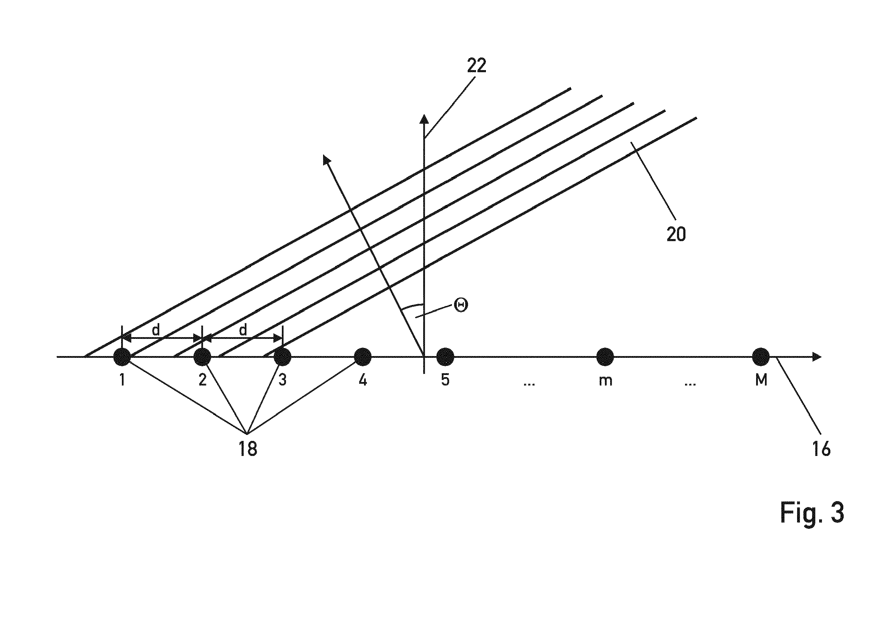

Fig. 3 zeigt eine schematische Darstellung einer Linearantenne zur Erläuterung der Anordnung der Wandler der Unterwasserantenne. Auf einer Längsachse 16 der Unterwasserantenne 14 sind die Wandler 18 äquidistant in einem Abstand d hintereinander gereiht angeordnet. Ferner ist in Fig. 3 die Phasenfront einer einfallenden Schallwelle 20 schematisch dargestellt, die um den Winkel Θ geschwenkt zur Querab-Richtung 22 der Unterwasserantenne 14 auf die Wandler 18 trifft.

Werden eine Mehrzahl von Wandlern 18 zu einer Gruppe signaltechnisch zusammengeschaltet, so hat die Unterwasserantenne 14 in Querab-Richtung 22 ihre höchste Empfindlichkeit bzw. ihre Hauptkeule. Um die Antennenempfindlichkeit auch in andere Richtungen zu schwenken, werden die Empfangssignale der Wandler 18 mit entsprechenden Zeitverzögerungskoeffizienten versehen und anschließend konphas aufaddiert. Somit kann die Hauptkeule der Unterwasserantenne 14 auf eine beliebige Richtung innerhalb eines Empfangssektors gerichtet werden, um die dortigen Signale mit dem größten Antennengewinn zu bewerten.

Eine maximale auswertbare Frequenz und der Öffnungswinkel einer Unterwasserantenne 14 werden zum einen durch die Anzahl der Wandler 18 bestimmt und zum anderen vom Abstand d der Wandler zueinander. Aus antennentheoretischen Gründen ergibt sich der Abstand d zu

$$d \leq \lambda/2 \, ,$$

wobei λ die Wellenlänge der einfallenden Schallwellen 20 ist.

Bei der Auswertung von Frequenzanteilen mit einer Wellenlänge von $\lambda/2 \leq d$ kommt es indes zu Mehrdeutigkeiten, da sich neben dem Hauptmaximum in der Richtcharakteristik von beiden Seiten Nebenmaxima, d.h. Grating-Lopes, bilden. Eine eindeutige Ortung von Schallquellen ist somit nicht mehr möglich.

Überträgt man derartiges auf den Seitenbereich der erfindungsgemäßen integrierten Unterwasserantenne 14, so erhält man für eine maximal auswertbare Frequenz im mittel- und tieffrequenten Bereich einen zugehörigen, maximalen Wandlerabstand d.

Die eingangs genannten Intercept-Funktionen und Passiv-Ranging-Sonar-/Aktiv-Ranging-Sonar-Funktionen verarbeiten jedoch hochfrequente Schallimpulse. Zum Integrieren derartiger Funktionen weist die erfindungsgemäße Unterwasserantenne 14 lokale Bereiche auf, in denen der Abstand d der Wandler 18 verringert wird bzw. die Wandlerdichte erhöht wird. Vorzugsweise ist eine höhere Wandlerdichte am Bug und/oder am Heck und/oder in der Bootsmitte vorgesehen.

Dabei ist es nicht zwingend erforderlich, die Wandler 18 homogen im gleichen Abstand d anzuordnen, da eine nachgeschaltete Signalverarbeitungseinheit über Mittel verfügt, Empfangssignale von ausgewählten Wandlern 18 zu verarbeiten. Ein geeignetes Auswahlmittel wählt dazu je nach auszuwertendem Frequenzbereich die Wandler 18 aus, die zur Antennenfunktion beitragen sollen. Ein entsprechendes Schaltmittel schaltet die Wandler 18 an bzw. ab und kann somit eine Frequenzanpassung vornehmen und die Apertur der Unterwasserantenne verändern. Für den Fall, dass nicht alle Wandler im Betrieb sind, sondern lediglich die ausgewählten Wandler, vergrößert sich der Abstand d der genutzten Wandler 18 und verringert sich der Stromverbrauch der Unterwasserantenne 14.

Vorzugsweise werden die Wandler 18 funktional zu Antennensegmenten zusammengefasst. Dies ermöglicht eine situationsbedingte Nutzung der integrierten Unterwasserantenne 14. Zum Ausüben eines Verfahrens zum Orten und/oder Klassifizieren von schallabstrahlenden Zielen mittels der erfindungsgemäßen akustischen Unterwasserantenne wird zunächst eine erste Peilung, auch Grobhorchen genannt, mit einem oder mehreren Antennensegmenten in einem Empfangssektor durchgeführt. Liefert das Grobhorchen eine Detektion eines Zieles, wird eine zweite Peilung, auch Feinpeilung genannt, in diesem Empfangssektor durchgeführt. Um bei der Feinpeilung eine genauere Detektion des Zieles zu erhalten, wird bei der Feinpeilung die Auflösung der Peilung gegenüber der Grobpeilung erhöht. Dies erfolgt durch Zuschalten weiterer Wandler oder Antennensegmenten.

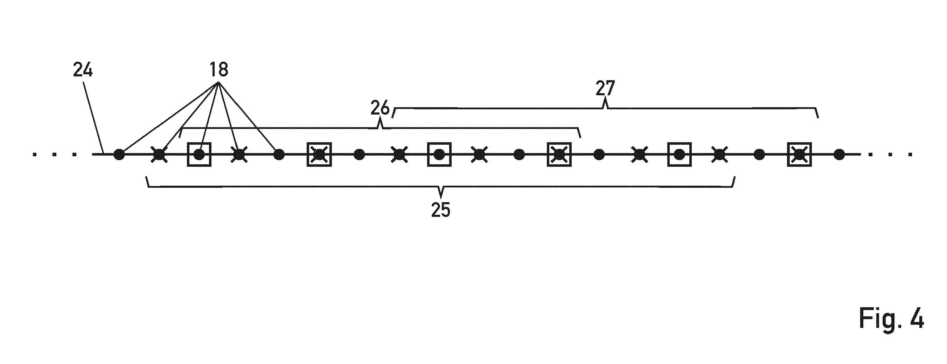

Fig. 4 zeigt eine schematische Darstellung zum Bilden von Antennensegmenten. Dargestellt ist ein (linearer) Ausschnitt der Unterwasserantenne 14, bei dem Wandler 18 zu Antennensegmenten 25, 26, 27 zusammengefasst sind. Das Zusammenfassen der Wandler 18 zu einem Antennensegment 25, 26, 27 kann beliebig erfolgen. Es müssen nicht Wandler 18 in Folge sein, sondern es kann immer der zweite oder dritte oder vierte etc. Wandler 18 zusammengefasst werden. Die zusammengefassten Wandler 18 sind in Fig. 4 symbolisch mit einem Kreis, X und Quadrat gekennzeichnet, wobei fünfzehn "Kreis"-Wandler das Antennensegment 25 bilden, vier "Quadrat"-Wandler das Antennensegment 26 bilden und sechs "X"-Wandler das Antennensegment 27 bilden.

Die genutzten, ausgewählten Wandler 18 weisen jedoch vorzugsweise den gleichen Abstand d zueinander innerhalb des Antennensegmentes auf. Die einzelnen Antennensegmente 25, 26, 27 können auch überlappend oder beabstandet angeordnet sein.

Die vorstehend beschriebenen Eigenschaften einer Linearantenne lassen sich auch auf nichtlineare Antennen übertragen, wie sie insbesondere im Bugbereich des Wasserfahrzeugs Verwendung finden.

Da die herkömmlichen Zylinderbasen oder Hufeisenbasen im Bugbereich des Wasserfahrzeugs vorwiegend im einstelligen und/oder unteren zweistelligen kHz-Bereich genutzt werden, um breitbandige Fahrgeräusche von Wasserfahrzeugen zu detektieren, weist die erfindungsgemäße integrierte Unterwasserantenne 14 im Bugbereich eine höhere Wandlerdichte auf als im Seitenbereich.

Zum Zwecke ihrer konphasen Aufsummierung werden die Empfangssignale der einzelnen Wandler 18 zeitlich derart verzögert, als ob die einfallenden Schallwellen 20 die Wandler 18 an deren fiktiven Ort auf einer zur Hauptrichtung der Richtcharakteristik rechtwinklig ausgerichteten Linie gleichzeitig erreichen, wobei die fiktiven Orte durch rechtwinklige Projektion der tatsächlichen Orte der Wandler auf die genannten Linien ermittelt werden.

Dabei werden die gemeinsam betriebenen Wandler 18 zu Gruppen zusammengefasst. Dies können sowohl benachbarte Wandler 18 sein, als auch jeder zweite oder jeder dritte oder jeder vierte etc., die dann ein Antennensegment bilden.

Die integrierte Unterwasserantenne 14 gemäß Fig. 2 ist grob in drei Bereiche unterteilt. Dies beinhaltet zwei Seitenbereiche und einen Bugbereich, wobei die Bereiche ohne feste bauliche Grenzen ineinander übergehen.

Herkömmlicherweise führt eine Steigerung der eindeutig aufzulösenden Frequenz zu einer Verschlechterung des Öffnungswinkels, da hierzu die Antennenaperturlänge verkürzt wird. Die erfindungsgemäße Unterwasserantenne 14 besitzt jedoch durch eine zentrale Signalverarbeitungseinheit die Möglichkeit, die einzelnen Antennenbereiche auszudehnen, um somit bspw. bei steigender Frequenz die Länge der verwendeten Antennenapertur beizubehalten.

Im beschriebenen Ausführungsbeispiel der akustischen Unterwasserantenne 14 gemäß Fig. 2 werden zur Konstruktion einer derartigen Antenne 14 einheitliche Wandler 18 verwendet. Dies sorgt für niedrige Herstellungs- und Instandhaltungskosten.

Eine alternative Ausgestaltung der Unterwasserantenne 14 sieht eine Verwendung von Wandleranordnungen, insbesondere Staves, zur Konstruktion einer derartigen Unterwasserantenne 14 vor. In einem Stave sind mehrere elektroakustische oder optoakustische Wandler voneinander beabstandet vertikal untereinander angeordnet. Die Anzahl der vertikal untereinander angeordneten Wandler bestimmt den vertikalen Öffnungswinkel der Richtcharakteristik der Unterwasserantenne 14. Die vorstehend beschriebenen Eigenschaften der erfindungsgemäßen integrierten Unterwasserantenne 14 lassen sich analog auf eine Unterwasserantenne 14 mit Verwendung derartiger Wandleranordnungen bzw. Staves übertragen.

Eine weitere alternative Ausgestaltung der Unterwasserantenne 14 sieht vor, die Wandler 18 oder Wandleranordnungen, insbesondere Staves, homogen auf der Grundlage der höchsten auszuwertenden Frequenz über die gesamte Unterwasserantenne 14 zu verteilen. Das Nutzen der tiefen Frequenzbereiche wird dann durch äquidistantes Auslassen von Wandlern 18 oder Staves erreicht.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Akustische Unterwasserantenne (14) zum Anbau an einen Bootskörper eines Wasserfahrzeugs (2) mit einer Vielzahl von in Abständen (d) nebeneinander angeordneten elektroakustischen und/oder optoakustischen Wandlern (18) und/oder Wandleranordnungen, insbesondere Staves, zum Senden und/oder Empfangen von Schallwellen, wobei ein oder mehrere Wandler (18) oder Wandleranordnungen ein Antennensegment (25, 26, 27) bilden,
**dadurch gekennzeichnet, dass**
die Antennensegmente (25, 26, 27) am Bootskörper des Wasserfahrzeugs (2) derart anbringbar sind, dass sich die Ausdehnung der Antenne (14), abhängig von den Abmessungen des Wasserfahrzeugs (2), vom Heckbereich des Wasserfahrzeugs (2) längsseits des Wasserfahrzeugs (2) bis zum Bug, um den Bug herum und auf der anderen Seite des Wasserfahrzeugs (2) längsseits bis zum Heckbereich erstreckt.

2. Unterwasserantenne nach Anspruch 1,
**gekennzeichnet durch**
eine zentrale Signalverarbeitungseinheit zum Bearbeiten von Sendesignalen und/oder Empfangssignalen der Wandler (18) und/oder Wandleranordnungen.

3. Unterwasserantenne nach Anspruch 1 oder 2,
**dadurch gekennzeichnet, dass**
ein Frequenzbereich in dem Schallwellen sendbar und/oder empfangbar sind je Antennensegment (25, 26, 27) auswählbar ist und das Auswählen des Frequenzbereiches der Antennensegmente (25, 26, 27) durch Hinzuschalten oder Auslassen von Wandlern (18) oder Wandleranordnungen erfolgt.

4. Unterwasserantenne nach einem der vorhergehenden Ansprüche,
**gekennzeichnet durch**
eine lokale erhöhte Wandlerdichte, insbesondere im Bereich vom Bug und/oder vom Heck und/oder von der Bootsmitte des Wasserfahrzeugs (2).

**5.** Unterwasserantenne nach einem der vorhergehenden Ansprüche,
**gekennzeichnet durch**
einen parallelen Betrieb ausgewählter Wandler (18) oder Wandleranordnungen zum Senden und Empfangen von Schallwellen.

**6.** Unterwasserantenne nach einem der vorhergehenden Ansprüche,
**dadurch gekennzeichnet, dass**
die Wandler (18) und/oder Wandleranordnungen der Unterwasserantenne (14) einen einheitlichen Aufbau aufweisen.

**7.** Unterwasserantenne nach einem der vorhergehenden Ansprüche,
**dadurch gekennzeichnet, dass**
Wandler (18) zum Bilden der Antennensegmente (25, 26, 27) auswählbar sind,
die ausgewählten Wandler (18) für ein oder mehrere Antennensegmente (25, 26, 27) nutzbar sind und
die Antennensegmente (25, 26, 27) angrenzend und/oder überlappend und/oder beabstandet bildbar sind.

**8.** Unterwasserantenne nach einem der vorhergehenden Ansprüche,
**dadurch gekennzeichnet, dass**
die Nutzung einzelner Antennensegmente (25, 26, 27) mittels einer Steuereinheit steuerbar ist, indem ein, mehrere oder alle Wandler (18) und/oder Wandleranordnungen mittels einem Schaltmittel anschaltbar und/oder abschaltbar sind.

**9.** U-Boot mit einer akustischen Unterwasserantenne (14) zum Anbau an dessen Bootskörper mit einer Vielzahl von in Abständen (d) nebeneinander angeordneten elektroakustischen und/oder optoakustischen Wandlern (18) und/oder Wandleranordnungen, insbesondere Staves, zum Senden und/oder Empfangen von Schallwellen, wobei ein oder mehrere Wandler (18) oder Wandleranordnungen ein Antennensegment (25, 26, 27) bilden, **dadurch gekennzeichnet, dass**
die Antennensegmente (25, 26, 27) am Bootskörper des U-Bootes (2) derart angeordnet sind, dass sich die Ausdehnung der Antenne (14), abhängig von den Abmessungen des U-Bootes (2), vom Heckbereich des U-Bootes (2) längsseits des U-Bootes (2) bis zum Bug, um den Bug herum und auf der anderen Seite des U-Bootes (2) längsseits bis zum Heckbereich erstreckt.

**10.** U-Boot nach Anspruch 9,
**gekennzeichnet durch**
eine derartige Ausbildung der akustischen Unterwasserantenne (14) nach einem der Ansprüche 2 bis 8.

**11.** Verfahren zum Peilen, Orten und/oder zum Klassifizieren eines schallabstrahlenden Zieles mittels einer akustischen Unterwasserantenne zum Anbau an einen Bootskörper eines Wasserfahrzeugs (2) mit einer Vielzahl von in Abständen (d) nebeneinander angeordneten elektroakustischen und/oder optoakustischen Wandlern (18) und/oder Wandleranordnungen, insbesondere Staves, zum Senden und/oder Empfangen von Schallwellen, wobei ein oder mehrere Wandler (18) oder Wandleranordnungen ein Antennensegment (25, 26, 27) bilden,
**dadurch gekennzeichnet, dass**
die Schallwellen mittels einer akustischen Unterwasserantenne (14) nach einem der Ansprüche 1 bis 8 empfangen werden.

**12.** Verfahren nach Anspruch 11,
**dadurch gekennzeichnet, dass**
eine erste Peilung mit einem oder mehreren Antennensegmenten in einem Empfangssektor durchgeführt wird und bei Detektion eines schallabstrahlenden Zieles eine zweite Peilung in diesem Empfangssektor durchgeführt wird, wobei die Auflösung der zweiten Peilung gegenüber der ersten Peilung erhöht wird und die Erhöhung der Auflösung mittels Hinzuschalten von Wandlern (18) oder Wandleranordnungen und/oder Antennensegmenten erzielt wird.

**13.** Verfahren nach Anspruch 11 oder 12,
**dadurch gekennzeichnet, dass**
Antennenfunktionen von mindestens zwei Antennen aus einer Gruppe von Antennen, nämlich Zylinderbasis, Hufeisenbasis, Intercept-Basis, Passiv-Ranging-Sonar-/Active-Ranging-Sonar-Basis, Flank-Array, flächige Seitenantenne, mittels der Unterwasserantenne (14) ausgeführt werden und die Wandler (18) und/oder Wandleranordnungen Sendesignale und/oder Empfangssignale erzeugen, welche von einer zentralen Signalverarbeitungseinheit verarbeitet werden.

**14.** Verfahren nach einem der Ansprüche 11 bis 13,
**dadurch gekennzeichnet, dass**
ein Frequenzbereich, in dem Schallwellen gesendet und/oder empfangen werden, je Antennensegment (25, 26, 27) ausgewählt wird, wobei das Auswählen des Frequenzbereiches der Antennensegmente (25, 26, 27) durch Hinzuschalten oder Auslassen von Wandlern (18) oder Wandleranordnungen erfolgt.

Stand der Technik

Fig. 1

EP 2 469 507 A1

Fig. 2

Fig. 3

Fig. 4

EP 2 469 507 A1

EP 2 469 507 A1

Europäisches Patentamt
European Patent Office
Office européen des brevets

# EUROPÄISCHER RECHERCHENBERICHT

Nummer der Anmeldung

EP 11 19 4512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/170481 A1 (MCNAMARA GEORGE C [US] ET AL) 21. November 2002 (2002-11-21) <br> * Absatz [0008] - Absatz [0014] * <br> * Absatz [0022] - Absatz [0023] * <br> * Abbildung 1 * <br> ----- | 1-14 | INV. <br> G10K11/00 <br> B63G8/39 |
| X | DE 101 28 973 C1 (STN ATLAS ELEKTRONIK GMBH [DE]) 25. Juli 2002 (2002-07-25) <br> * Zusammenfassung * <br> * Absatz [0008] - Absatz [0019] * <br> * Abbildung 1 * <br> ----- | 1-14 | |
| A | US 4 158 189 A (WARDLE WILLIAM F [US]) 12. Juni 1979 (1979-06-12) <br> * das ganze Dokument * <br> ----- | 1-14 | |
| A | DE 10 2008 052355 A1 (ATLAS ELEKTRONIK GMBH [DE]) 22. April 2010 (2010-04-22) <br> * das ganze Dokument * <br> ----- | 1-14 | |

RECHERCHIERTE SACHGEBIETE (IPC)

G10K
B63G

Der vorliegende Recherchenbericht wurde für alle Patentansprüche erstellt

| Recherchenort | Abschlußdatum der Recherche | Prüfer |
|---|---|---|
| München | 13. März 2012 | Marquart, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT**
**ÜBER DIE EUROPÄISCHE PATENTANMELDUNG NR.**

EP 11 19 4512

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2012

| Im Recherchenbericht angeführtes Patentdokument | Datum der Veröffentlichung | Mitglied(er) der Patentfamilie | Datum der Veröffentlichung |
|---|---|---|---|
| US 2002170481 A1 | 21-11-2002 | KEINE | |
| DE 10128973 C1 | 25-07-2002 | AT 361872 T | 15-06-2007 |
| | | AU 784786 B2 | 22-06-2006 |
| | | AU 4445802 A | 19-12-2002 |
| | | DE 10128973 C1 | 25-07-2002 |
| | | EP 1266823 A2 | 18-12-2002 |
| | | ES 2283478 T3 | 01-11-2007 |
| | | PT 1266823 E | 17-07-2007 |
| US 4158189 A | 12-06-1979 | US 4140992 A | 20-02-1979 |
| | | US 4158189 A | 12-06-1979 |
| DE 102008052355 A1 | 22-04-2010 | DE 102008052355 A1 | 22-04-2010 |
| | | EP 2351018 A2 | 03-08-2011 |
| | | KR 20110093765 A | 18-08-2011 |
| | | WO 2010046317 A2 | 29-04-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19909485 C1
- EP 0654953 B1
- EP 2010936 B1
- DE 102006045686 B3
- US 4910719 A
- DE 19612503 C2
- DE 102004037987 A1
- DE 3633991 A1